# EUROPÄISCHE PATENTSCHRIFT

(11) **EP 0 579 869 B1**
(45) Veröffentlichungstag und Bekanntmachung des Hinweises auf die Patenterteilung: **04.09.1996**
(21) Anmeldenummer: 92121544.8
(22) Anmeldetag: 18.12.1992
(51) Int. Cl.: F16D 23/14

(54) **Führungshülse mit integrierter Dichtung für ein Kupplungsausrücklager eines Getriebes**
Guide-tube with integrated sealing means for a clutch release bearing in a transmission
Tube-guide à étanchéité intégrée pour une butée de débrayage d'une transmission

(30) Priorität: 22.07.1992 DE 4224179
(43) Veröffentlichungstag der Anmeldung: 26.01.1994
(73) Patentinhaber: Firma Carl Freudenberg, D-69469 Weinheim (DE)
(72) Erfinder: Freiwald, Gerhard, W-6944 Hemsbach (DE)

(56) Entgegenhaltungen:
- EP-A- 0 284 457
- EP-A- 0 301 965
- EP-A- 0 336 843
- EP-A- 0 538 130
- DE-A- 4 040 990

## Beschreibung

Die Erfindung betrifft eine Führungshülse mit integrierter Dichtung für das Kupplungsausrücklager eines Getriebes, umfassend einen eine Eingangswelle des Getriebes umfangsseitig mit radialem Abstand umschließenden Rohrstutzen und einen am Rohrstutzen festgelegten Befestigungsflansch, wobei der Rohrstutzen auf der der Außenwand des Getriebes zugewandten Seite einen im wesentlichen Z-förmigen Querschnitt aufweist, wobei der Z-förmige Querschnitt durch einen radial innen liegenden ersten Axialschenkel und einen radial außen liegenden zweiten Axialschenkel gebildet ist und wobei der erste und der zweite Axialschenkel durch einen Radialschenkel miteinander verbunden sind, wobei die Dichtung auf der der abzudichtenden Eingangswelle zugewandten Seite mit zumindest einer dynamisch beanspruchten ersten Dichtlippe versehen ist und an einem Versteifungsring aus einem nicht kriechenden Werkstoff festgelegt ist und wobei der Versteifungsring unter radialer Vorspannung im Rohrstutzen gehalten ist.

Eine solche Führungshülse ist aus der EP-A-0 336 843 A1 bekannt. Die Dichtung umfaßt einen Versteifungsring mit im wesentlichen T-förmigem Querschnitt, wobei der elastomere Werkstoff der Dichtung am Radialvorsprung des Versteifungsrings festgelegt ist. In axialer Richtung einerseits ist der Versteifungsring unter radialer Vorspannung innerhalb des zweiten Axialschenkels der Führungshülse angeordnet, wobei der Versteifungsring in axialer Richtung andererseits als Zentrierbund ausgebildet ist, zur Zentrierbund der Führungshülse an einem Getriebegehäuse. Die Dichtung weist eine dynamisch beanspruchte Dichtlippe auf, die in radialer Richtung außenseitig von einer Ringwendelfeder umschlossen ist. Mit axialem Abstand benachbart zu der dynamisch beanspruchten Dichtlippe ist auf der dem Getriebe abgewandten Seite eine weitere Dichtlippe vorgesehen, um Verunreinigungen von der dynamisch beanspruchten Dichtlippe fernzuhalten.

Eine weitere Führungshülse ist aus der EP-A-0 301 965 A1 bekannt. Die vorbekannte Führungshülse für das Kupplungsausrücklager eines Kraftfahrzeuggetriebes zeigt einen Befestigungsflansch zur Befestigung der Führungshülse mit der Außenfläche einer Getriebegehäusewand, wobei der Befestigungsflansch in der gleichen Radialebene angeordnet ist, wie ein Rohrabschnitt, der den Dichtungsring aufnimmt. Dabei ist allerdings zu beachten, daß der Dichtungsring an einem sich in radialer Richtung erstreckenden Rohrabschnitt angeordnet ist und dadurch Relaxationserscheinungen des elastomeren Werkstoffs begünstigt werden, was zu Undichtigkeiten im Bereich der dynamischen Abdichtung führen kann.

Der Erfindung liegt die Aufgabe zugrunde, einen verbesserte dynamische Abdichtung der Eingangswelle durch eine stabilere Festlegung der Dichtung innerhalb des Rohrstutzens zu bewirken und gleichzeitig die Außenwand des Getriebes während einer langen Gebrauchsdauer statisch abzudichten.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß die Dichtung ein an den Rohrstutzen angepaßtes, Z-förmiges Profil aufweist und auf der der Außenwand des Getriebes zugewandten Seite mit zumindest einer axial in Richtung der Außenwand vorstehenden und mit dieser in dichtenden Eingriff bringbaren statisch beanspruchten zweiten Dichtlippe versehen ist, daß die erste und die zweite Dichtlippe einstückig ineinander übergehend am Versteifungsring festgelegt sind und daß der Versteifungsring in dem ersten Axialschenkel gehalten ist. Durch das an das Z-förmige Profil des Rohrstutzens angepaßte Profil der Dichtung, wobei die erste und die Zweite Dichtlippe einstückig ineinander übergehend an einem Z-förmigen Versteifungsring aus einem nicht kriechenden Werkstoff, beispielsweise Metall, festgelegt sind und dieser unter radialer Vorspannung von dem ersten Axialschenkel des Rohrstutzens, der bevorzugt ebenfalls aus einem metallischen Werkstoff besteht, umschlossen ist, ergibt sich eine stabile räumliche Zuordnung der Dichtlippen bezogen auf die abzudichtenden Flächen und den Rohrstutzen. Desweiteren ist von Vorteil, daß bei radialen Auslenkbewegungen der abzudichtenden Eingangswelle die Dichtung am Versteifungsring nur auf Druck belastet wird. Gebrauchsdauerverringernde Schub- und Zugspannungen, insbesondere im Bereich der Festlegung am Versteifungsring, können durch die Ausgestaltung der Dichtung und ihrer Anordnung innerhalb des Rohrstutzens zuverlässig vermieden werden. Durch die kompakte Bauform der Dichtung und die relativ steife Zuordnung der ersten und zweiten Dichtlippe am Versteifungsring ist eine exakte Positionierung der Dichtung an den abzudichtenden Flächen gewährleistet.

Während der bestimmungsgemäßen Verwendung kann berühren der Versteifungsring den Radialschenkel und axialer Vorspannung dichtend berühren. Die axiale Vorspannung wird dadurch erzeugt, daß die statisch beanspruchte Zweite Dichtlippe bei der Montage der Führungshülse an der Abschlußwandung des Getriebes elastisch verformt wird, so daß der Versteifungsring, der auf der der Abschlußwand gegenüberliegenden Seite der zweiten Dichtlippe angeordnet ist, an den Radialschenkel der Kupplungsführungshülse angelegt ist.

Eine exakte Zuordnung der Dichtung zu dem Rohrstutzen kann dadurch erzielt werden, daß der Versteifungsring und der Rohrstutzen einander direkt anliegend berühren. Neben dieser Ausgestaltung ist außerdem eine Ausführung denkbar, bei der der Versteifungsring auf der dem Radialschenkel des Rohrstutzens zugewandten Seite in zumindest einem Teilbereich seiner radialen Erstreckung vom Dichtungswerkstoff der zweiten Dichtlippe vollständig umschlossen ist.

Im Hinblick auf einen größtmöglichen Schutz der zweiten Dichtlippe vor mechanischen, äußeren Einflüssen kann die zweite Dichtlippe während der bestimmungsgemäßen Verwendung zumindest teilweise bevorzugt vollständig von dem zweiten Axialschenkel überdeckt sein, wobei der zweite Axialschenkel im Bereich seiner Stirnfläche die Außenwand des Getriebes zweckmäßig anliegend berührt. Der zweite Axialschenkel bedingt einerseits einen Schutz der zweiten Dichtlippe vor äußeren Einflüssen und andererseits einen Schutz der zweiten Dichtlippe vor übermäßiger Durckbeanspruchung in axialer Richtung. Die Montage der Führungshülse wird dadurch erheblich vereinfacht, daß sie an die Außenwand des Getriebes angeschraubt wird, bis der zweite Axialschenkel mit seiner Stirnfläche an der Außenwand des Getriebes anliegt. Die vor der Montage in axialer Richtung über die Stirnfläche des zweiten Axialschenkels vorstehenden zweite Dichtlippe berührt dann die Außenwand des Getriebes unter einer genau vorher bestimmten axialen Anpressung.

Gemäß einer vorteilhaften Ausgestaltung können der Rohrstutzen und der Befestigungsflansch einstückig ausgebildet sein. Neben einer einfacheren Herstellbarkeit durch weniger Teile, die aneinander montiert werden müssen, ist die Montage vereinfacht.

Eine verbesserte statische Abdichtung kann dadurch erzielt werden, daß die zweite Dichtlippe mit einer radial benachbarten Zusatzdichtlippe einen Spalt begrenzt, der mit einer Fettfüllung versehen ist.

Eine besonders stabile und genaue Zuordnung der Dichtung innerhalb des Rohrstutzens kann dadurch erzielt werden, daß das Verhältnis von axialer Ausdehnung der Dichtung zu radialer Ausdehnung 1:1 bis 1:0,25 beträgt. Verkantungserscheinungen bei Verlagerungen der abzudichtenden Eingangswelle sind durch diese Ausgestaltung nicht zu befürchten. Dadurch, daß die radiale Ausdehnung höchstens genau so groß ist, wie die axiale Ausdehnung der Dichtung, bevorzugt allerdings deutlich geringer, ergibt sich eine besonders lange Führung der dynamisch beanspruchten ersten Dichtlippe innerhalb des radial innen liegenden ersten Axialschenkels, so daß herstellungsbedingten Toleranzen des Rohrstutzens keinen negativen Einfluß auf die Gebrauchseigenschaften der Führungshülse haben. Eine besonders große Maßhaltigkeit des ersten Axialschenkels bezogen auf den Radialschenkel ist daher nicht erforderlich, wodurch die Führungshülse einfacher und wirtschaftlich günstig herstellbar ist.

Die dynamisch beanspruchte erste Dichtlippe kann von einander durchschneidenden Kegelflächen begrenzt sein, wobei die auf der dem abzudichtenden Medium zugewandten Seite angeordnete Kegelfläche einen größeren Winkel mit der Längsachse der Führungshülse einschließt, als die Kegelfläche auf der axial gegenüberliegenden Seite. Diese Ausgestaltung bewirkt eine Rückförderwirkung des abzudichtenden Mediums in Richtung des abzudichtenden Raums und eine ständige Erneuerung des Schmierfilms zwischen der ersten Dichtlippe und der abzudichtenden Welle durch ständige Umwälzung des Schmiermittels. Der dynamisch beanspruchten ersten Dichtlippe kann auf der dem abzudichtenden Raum abgewandten Seite eine Schutzdichtlippe zugeordnet sein, die eine Beaufschlagung der ersten Dichtlippe mit gebrauchsdauerverringernden Schadstoffpartikeln verhindert.

Für die exakte Zuordnung der dynamisch beanspruchten ersten Dichtlippe zwischen dem Rohrstutzen und der abzudichtenden Welle ist es vorgesehen, daß der radiale Abstand zwischen dem Innendurchmesser der ersten Dichtlippe und dem Rohrstutzen 0,25 bis 1 mal so groß ist, wie die axiale Ausdehnung der Versteifungsringes auf der dem ersten Axialschenkel gegenüberliegenden Seite. Ein geringer radialer Abstand zwischen der Eingangswelle und dem Rohrstutzen bedingt eine formstabile Ausgestaltung der Dichtung auch bei Verlagerungen der Eingangswelle in axialer Richtung, beispielsweise durch Wärmedehnung hervorgerufen. Die räumliche Zuordnung der dynamisch beanspruchten ersten Dichtlippe verändert ihre Lage im bezug auf die Oberfläche der abzudichtenden Welle nicht, so daß sich stets gleichbleibende Dichtungseigenschaften, beispielsweise ein stets gleichbleibender Rückfördereffekt während der bestimmungsgemäßen Verwendung einstellen.

Die erfindungsgemäße Führungshülse wird nachfolgend anhand eines Ausführungsbeispiels näher erläutert. Dieses zeigt die zu berücksichtigenden Einzelkomponenten teilweise in schematischer Darstellung.

In Figur 1 ist ein Ausführungsbeispiel einer Führungshülse mit integrierter Dichtung in quergeschnittener Darstellung gezeigt.

In Figur 2 ist der Rohrstutzen aus Figur 1 als Einzelteil dargestellt.

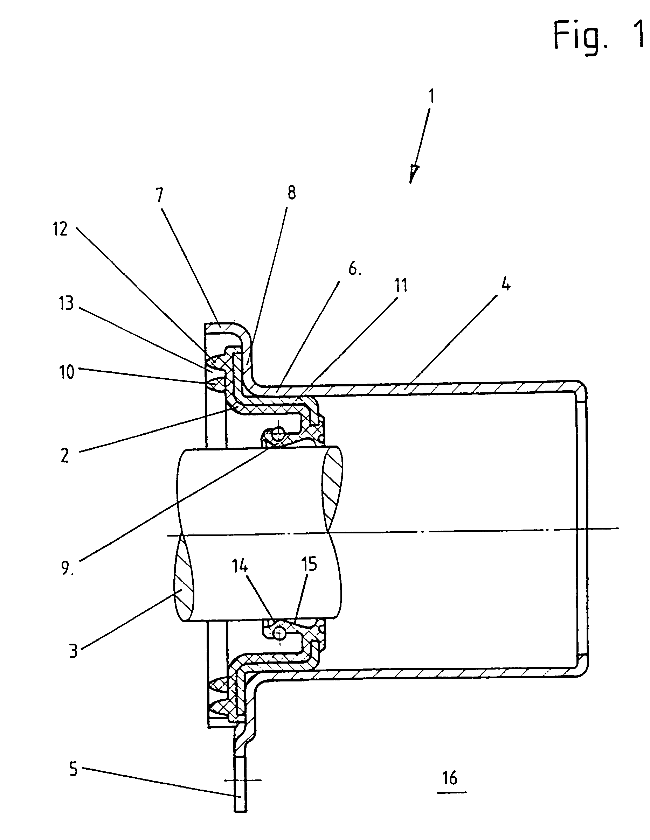

In Figur 1 ist eine Führungshülse 1 mit integrierter Dichtung 2 dargestellt, die im Bereich des Kupplungsausrücklagers eines Getriebes, beispielsweise für Kraftfahrzeuge, zur Anwendung gelangt. Die Führungshülse 1 umfaßt einen Rohrstutzen 4, der eine Eingangswelle 3 des Getriebes umfangsseitig mit radialem Abstand umschließt. Das hier nicht dargestellte Getriebe ist auf der dem abzudichtenden Medium zugewandten Seite 16 an die Führungshülse 1 angeflanscht. Der Rohrstutzen 4 und der Befestigungsflansch 5 sind einstückig ineinander übergehend ausgebildet und bestehen in diesem Ausführungsbeispiel aus einem tiefgezogenen Blech. Der Rohrstutzen 4 umfaßt einen radial innen liegenden ersten Axialschenkel 6 und einen radial außen liegenden zweiten Axialschenkel 7, die über einen Radialschenkel 8 miteinander verbunden sind. Der radial innenliegende erste Axialschenkel 6 umschließt den Versteifungsring 11 unter radialer Vorspannung, wobei der Versteifungsring 11 im Bereich seiner axialen und im Bereich seiner radialen Erstreckung den Rohrstutzen 4 anliegend berührt. Die Dichtung 2 wird durch eine reibschlüssige Verbindung zwischen dem Versteifungsring 11 und dem ersten Axialschenkel 6 gehalten. Die Dichtung 2 umfaßt in diesem Ausführungsbeispiel eine dynamisch beanspruchte erste Dichtlippe 9 die die abzudichtende Eingangswelle 3 dynamisch abdichtet. Auf der der Außenwand des Getriebes zugewandten Seite sind zwei statisch beanspruchte zweite Dichtlippen 10, 12 angeordnete, die einander mit radialem Abstand benachbart zugeordnet sind, wobei der durch den radialen Abstand gebildete Spalt 13 zwischen der zweiten Dichtlippe 10 und der Zusatzdichtlippe 12 mit Fett gefüllt ist. Die Herstellung der beanspruchten Führungshülse 1 ist besonders einfach, da sie aus nur zwei aneinander festzulegenden Teilen besteht. Der Rohrstutzen 4 mit dem einstückig ausgebildeten Befestigungsflansch 5 bildet im Bereich des ersten Axialschenkels 6 die Aufnahme für die Dichtung 2, bei der die erste Dichtlippe 9 und die zweite Dichtlippe 10 einstückig ineinander übergehend an einem Versteifungsring 11 festgelegt sind. Durch die vorteilhaften geometrischen Abmessungen der Dichtung 2, deren Verhältnis von axialer Ausdehnung zu radialer Ausdehnung 1:1 bis 1.0,25, bevorzugt 1:0,75 bis 1:0,5 beträgt, ist eine exakte und während der bestimmungsgemäßen Verwendung stets gleichbleibende Zuordnung zwischen den einzelnen Teilen der Führungshülse 1 bedingt. Herstellungsbedingte Toleranzen des Rohrstutzens 4 vermögen die guten Gebrauchseigenschaften der Führungshülse nicht zu beeinträchtigen. Der zweite Axialschenkel 7 überdeckt die statische beanspruchte zweite Dichtlippe in diesem Ausführungsbeispiel vollständig, so daß mechanische Beschädigungen der zweiten Dichtlippe 10 zuverlässig vermieden werden können. Zur Begrenzung der elastischen Verformung der zweiten Dichtlippe 10 während der Montage an der Außenwand des Getriebes ist der zweite Axialschenkel 7 derart angeordnet, daß er sich bei einer vorher bestimmten elastischem Vorspannung der zweiten Dichtlippe 10 an die Außenwandung des Getriebes anlegt und dadurch eine noch größere Verformung, möglicherweise eine Überbeanspruchung der zweiten Dichtlippe 10, verhindert.

Die axiale Ausdehnung der Dichtung 2 ist in diesem Ausführungsbeispiel doppelt so groß, wie die radiale Ausdehnung.

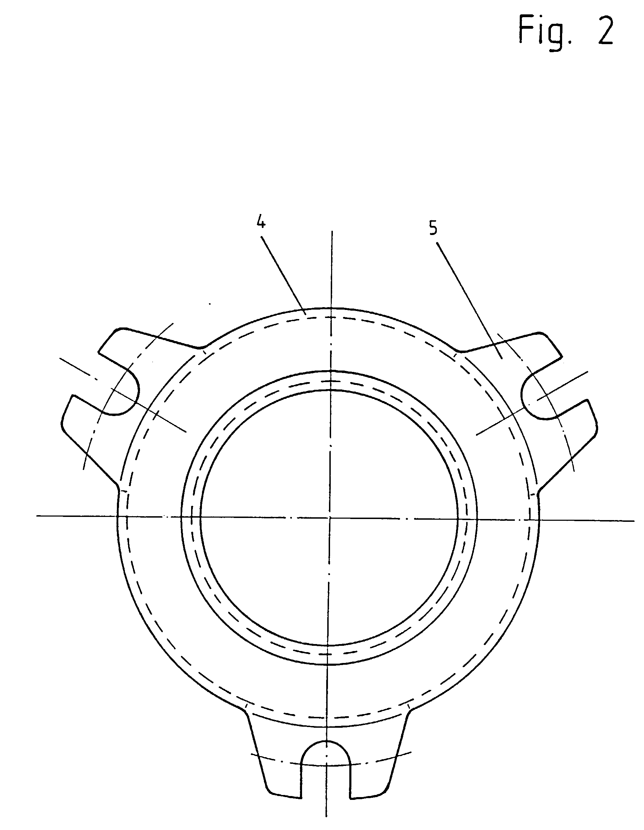

In Figur 2 ist der Rohrstutzen 4 der Führungshülse 1 als Einzelteil gezeigt, der einstückig mit dem Befestigungsflansch 5 ausgebildet ist. Der Befestigungsflansch 5 weist drei gleichmäßig in Umfangsrichtung verteilte Ausnehmungen zur Befestigung an der Außenwand des Getriebegehäuses auf. In dieser Darstellung ist zu erkennen, daß der radial außen liegende, zweite Axialschenkel 7 des Rohrstutzens 4 die statisch beanspruchte zweite Dichtlippe 10 radial außenseitig vollständig überdeckt und sie dadurch vor schädlichen mechanischen Einflüssen schützt.

## Patentansprüche

1. Führungshülse (1) mit integrierter Dichtung (2) für das Kupplungsausrücklager eines Getriebes, umfassend einen eine Eingangswelle (3)des Getriebes umfangsseitig mit radialem Abstand umschließenden Rohrstutzen (4) und einen am Rohrstutzen (4) festgelegten Befestigungsflansch, wobei der Rohrstutzen (4) auf der der Außenwand des Getriebes zugewandten Seite einen im wesentlichen Z-förmigen Querschnitt aufweist, wobei der Z-förmige Querschnitt durch einen radial innen liegenden ersten Axialschenkel (6) und einen radial außen liegenden zweiten Axialschenkel (7) gebildet ist, wobei der erste (6) und der zweite Axialschenkel (7) durch einen Radialschenkel (8) miteinander verbunden sind, wobei die Dichtung (2) auf der der abzudichtenden Eingangswelle (3) zugewandten Seite mit zumindest einere dynamisch beanspruchten ersten Dichtlippe (9) versehen ist und an einem Versteifungsring (11) aus einem nicht kriechenden Werkstoff festgelegt ist und wobei der Versteifungsring (11) unter radialer Vorspannung im Rohrstutzen (4) gehalten ist, dadurch gekennzeichnet, daß die Dichtung (2) ein an den Rohrstutzen (4) angepaßtes Z-förmiges Profil aufweist und auf der der Außenwand des Getriebes zugewandten Seite mit zumindest einer axial in Richtung der Außenwand vorstehenden und mit dieser in dichtenden Eingriff bringbaren statisch beanspruchten zweiten Dichtlippe (10) versehen ist, daß die erste und die zweite Dichtlippe (9,.10) einstückig ineinander übergehend am Versteifungsring (11) festgelegt sind und daß der Versteifungsring (11) in dem ersten Axialschenkel (6) gehalten ist.

2. Führungshülse nach Anspruch 1, dadurch gekennzeichnet, daß der Versteifungsring (11) den Radialschenkel (8) während der bestimmungsgemäßen Verwendung unter axialer Vorspannung dichtend berührt.

3. Führungshülse nach Anspruch 1 bis 2, dadurch gekennzeichnet, daß der Versteifungsring (11) und der Rohrstutzen (4) einander direkt anliegend berühren.

4. Führungshülse nach Anspruch 1 bis 3, dadurch gekennzeichnet, daß die zweite Dichtlippe (10) während der bestimmungsgemäßen Verwendung von dem zweiten Axialschenkel (7) vollständig überdeckt ist und daß der zweite Axialschenkel (7) im Bereich seiner Stirnfläche die Außenwand des Getriebes anliegend berührt.

5. Führungshülse nach Anspruch 1 bis 4, dadurch gekennzeichnet, daß der Rohrstutzen (4) und der Befestigungsflansch (5) einstückig ausgebildet sind.

6. Führungshülse nach Anspruch 1 bis 5, dadurch gekennzeichnet, daß die zweite Dichtlippe (10) mit einer radial benachbarten Zusatzdichtlippe (12) einen Spalt (13) begrenzt und daß der Spalt (13) mit einer Fettfüllung versehen ist.

7. Führungshülse nach Anspruch 1 bis 6, dadurch gekennzeichnet, daß das Verhältnis von axialer Ausdehnung der Dichtung (2) zu radialer Ausdehnung 1:1 bis 1:0,25 beträgt.

8. Führungshülse nach Anspruch 1 bis 7, dadurch gekennzeichnet, daß die erste Dichtlippe (9) von einander durchschneidenden Kegelflächen (14, 15) begrenzt ist, und daß die auf der dem abzudichtenden Medium zugewandten Seite (16) angeordnete Kegelfläche (14) einen größeren Winkel mit der Längsachse der Führungshülse (1) einschließt, als die Kegelfläche (15) auf der axial gegenüberliegenden Seite.

9. Führungshülse nach Anspruch 1 bis 8, dadurch gekennzeichnet, daß der radiale Abstand zwischen dem Innendurchmesser der ersten Dichtlippe (9) und dem Rohrstutzen (4) 0,25 bis 1 mal so groß ist, wie die axiale Ausdehnung des Versteifungsrings (11) auf der dem ersten Axialschenkel (6) zugewandten Seite.

## Claims

1. A guide bush (1) with an integrated seal (2) for the clutch disengagement bearing of a gear mechanism, comprising a tube stub (4), which surrounds an input shaft (3) of the gear mechanism with radial clearance on the circumferential side, and an attachment flange which is fixed to the tube stub (4), the tube stub (4) having a substantially Z-shaped cross-section on the side facing the outer wall of the gear mechanism, the Z-shaped cross-section being formed by a first axial limb (6) located on the radially inner side and a second axial limb (7) located on the radially outer side, the first (6) and the second axial limb (7) being connected to one another by a radial limb (8), the seal (2) being provided with at least one dynamically loaded first sealing lip (9) on the side facing the input shaft (3) to be sealed off and being fixed on a reinforcing ring (11) made of a non-creep material, and the reinforcing ring (11) being held in the tube stub (4) with radial prestress, characterized in that the seal (2) has a Z-shaped profile adapted to the tube stub (4) and is provided, on the side facing the outer wall of the gear mechanism, with at least one statically loaded second sealing lip (10) which projects axially in the direction of the outer wall and can be brought into sealing engagement therewith, in that the first and the second sealing lips (9, 10) are fixed on the reinforcing ring (11), merging integrally into one another, and in that the reinforcing ring (11) is held in the first axial limb (6).

2. A guide bush according to claim 1, characterized in that the reinforcing ring (11) touches the radial limb (8) in a sealing manner under axial prestress during the intended use.

3. A guide bush according to claim 1 or 2, characterized in that the reinforcing ring (11) and the tube stub (4) touch, resting directly against one another.

4. A guide bush according to any one of claims 1 to 3, characterized in that the second sealing lip (10) is completely covered by the second axial limb (7) during the intended use, and in that, in the region of its end face, the second axial limb (7) touches the outer wall of the gear mechanism, resting against it.

5. A guide bush according to any one of claims 1 to 4, characterized in that the tube stub (4) and the attachment flange (5) are of integral construction.

6. A guide bush according to any one of claims 1 to 5, characterized in that the second sealing lip (10) bounds a gap (13) with a radially adjacent additional sealing lip (12), and in that the gap (13) is provided with a filling of grease.

7. A guide bush according to any one of claims 1 to 6, characterized in that the ratio of the axial extent of the seal (2) to the radial extent is from 1:1 to 1:0.25.

8. A guide bush according to any one of claims 1 to 7, characterized in that the first sealing lip (9) is bounded by intersecting conical surfaces (14, 15), and in that the conical surface (14) arranged on the side (16) facing the medium to be sealed off encloses a larger angle with the longitudinal axis of the guide bush (1) than the conical surface (15) on the axially opposite side.

9. A guide bush according to any one of claims 1 to 8, characterized in that the radial clearance between the inside diameter of the first sealing lip (9) and the tube stub (4) is 0.25 times to equal the size of the axial extent of the reinforcing ring (11) on the side facing the first axial limb (6).

## Revendications

1. Tube-guide (1) avec élément d'étanchéité (2) intégré pour la butée de débrayage d'une transmission, comprenant une tubulure (4) entourant avec écartement radial un arbre d'entrée (3) de la transmission du côté périphérique et une collerette de fixation fixée à la tubulure (4), la tubulure (4) présentant, sur le côté orienté vers la paroi extérieure de la transmission, une section transversale essentiellement en forme de Z, la section transversale en forme de Z étant formée par une première branche axiale (6) se trouvant radialement au dedans et une deuxième branche axiale (7) se trouvant radialement au dehors, la première (6) et la deuxième (7) branche axiale étant reliées ensemble par une branche radiale (8), l'élément d'étanchéité (2) étant pourvu, sur le côté orienté vers l'arbre d'entrée (3) à rendre étanche, d'au moins une première lèvre d'étanchéité (9) sollicitée de façon dynamique et étant fixée à une bague de renforcement (11) en matière ne subissant pas le fluage et la bague de renforcement (11) étant maintenue par précontrainte radiale dans la tubulure (4), caractérisé en ce que l'élément d'étanchéité (2) présente un profil en forme de Z adapté à la tubulure (4) et est pourvu, sur le côté orienté vers la paroi extérieure de la transmission, d'au moins une deuxième lèvre d'étanchéité (10) sollicitée de façon statique et faisant saillie axialement dans le sens de la paroi extérieure et pouvant être mise en prise étanche avec celle-ci, en ce que la première et la deuxième lèvre d'étanchéité (9, 10) conçues de façon solidaire et se fondant l'une dans l'autre, sont fixées à la bague de renforcement (11) et en ce que la bague de renforcement (11) est maintenue dans la première branche axiale (6).

2. Tube-guide selon la revendication 1, caractérisé en ce que la bague de renforcement (11) touche de façon étanche, par précontrainte axiale, la branche radiale (8) pendant l'utilisation en conformité avec sa destination.

3. Tube-guide selon l'une des revendications 1 à 2, caractérisé en ce que la bague de renforcement (11) et la tubulure (4) se touchent l'une l'autre directement de façon adjacente.

4. Tube-guide selon l'une des revendications 1 à 3, caractérisé en ce que la deuxième bague d'étanchéité (10) est complètement recouverte par la deuxième branche axiale (7) pendant l'utilisation en conformité avec sa destination et en ce que la deuxième branche axiale (7), dans la zone de sa face avant, touche de façon adjacente la paroi extérieure de la transmission.

5. Tube-guide selon l'une des revendications 1 à 4, caractérisé en ce que la tubulure (4) et la collerette de fixation (5) sont conçues de façon solidaire.

6. Tube-guide selon l'une des revendications 1 à 5, caractérisé en ce que la deuxième lèvre d'étanchéité (10) limite une fente (13) par une lèvre d'étanchéité complémentaire (12) radialement contiguë et en ce que la fente (13) est pourvue d'une charge de graisse.

7. Tube-guide selon l'une des revendications 1 à 6, caractérisé en ce que le rapport de la dimension axiale de l'élément d'étanchéité (2) avec la dimension radiale est de 1 : 1 à 1 : 0,25.

8. Tube-guide selon l'une des revendications 1 à 7, caractérisé en ce que la première lèvre d'étanchéité (9) est limitée par des surfaces coniques (14, 15) se coupant l'une l'autre, et en ce que la surface conique (14), disposée sur le côté (16) orienté vers le milieu à rendre étanche, forme avec l'axe longitudinal du tube-guide (1) un angle plus grand que la surface conique (15) se trouvant sur le côté opposé axialement.

9. Tube-guide selon l'une des revendications 1 à 8, caractérisé en ce que l'écartement radial entre le diamètre intérieur de la première lèvre d'étanchéité (9) et la tubulure (4) est 0,25 à 1 fois aussi grand que la dimension axiale de la bague de renforcement (11) se trouvant sur le côté orienté vers la première branche axiale (6).
